Europäisches Patentamt

European Patent Office

Office européen des brevets

(11) Publication number : **0 502 699 B1**

# EUROPEAN PATENT SPECIFICATION

(45) Date of publication of patent specification :
**18.10.95 Bulletin 95/42**

(51) Int. Cl.⁶ : **G11B 5/66**

(21) Application number : **92301818.8**

(22) Date of filing : **03.03.92**

(54) **Perpendicular magnetic film and magnetic recording medium.**

(30) Priority : **04.03.91 JP 37111/91**

(43) Date of publication of application :
**09.09.92 Bulletin 92/37**

(45) Publication of the grant of the patent :
**18.10.95 Bulletin 95/42**

(84) Designated Contracting States :
**DE FR GB**

(56) References cited :
**EP-A- 0 241 080**
**EP-A- 0 304 873**
**EP-A- 0 304 927**
**EP-A- 0 459 411**

(73) Proprietor : **KABUSHIKI KAISHA TOSHIBA**
**72, Horikawa-cho,**
**Saiwai-ku**
**Kawasaki-shi, Kanagawa-ken 210, Tokyo (JP)**

(72) Inventor : **Yusu, Keiichiro, c/o Intellectual**
**Property Div.**
**Toshiba Corporation**
**1-1-1 Shibaura**
**Minato-ku, Tokyo (JP)**
Inventor : **Hashimoto, Susumu, c/o Intellectual**
**Property Div.**
**Toshiba Corporation**
**1-1-1 Shibaura**
**Minato-ku, Tokyo (JP)**
Inventor : **Inomata, Inomata, c/o Intellectual**
**Property Div.**
**Toshiba Corporation**
**1-1-1 Shibaura**
**Minato-ku, Tokyo (JP)**

(74) Representative : **BATCHELLOR, KIRK & CO.**
**2 Pear Tree Court**
**Farringdon Road**
**London EC1R 0DS (GB)**

## Description

The present invention relates to a perpendicular magnetic film suitable for magnetic optical recording or magnetic recording, and a magnetic recording medium made of such film.

A perpendicular magnetic film having an easy magnetisation axis in the direction perpendicular to the film surface exhibits high efficiency as a high density recording medium. Such media are capable of recording information with spots below several $\mu$m diameter when optical beams such as laser beams are applied and the recorded information can be read using magneto-optics effects such as the Kerr effect. As such recording media, poly-crystal films including MnBi, compound single crystal thin films including GdIG (gadolinium-iron-garnet), rare earth-iron amorphous thin films such as Tb-Fe, etc. are available. However, they have some disadvantages such as productivity, S/N ratio, etc. and further improvement has been sought.

Recently, artificial multilayers that are constituted by Co and Pt (or Pd) layers of several angstrom thickness to form a film of several hundred angstroms are generating interest as a new perpendicular magnetic film. This multilayer has a large magneto-optical effect in the short wavelength region of 400 to 500 nm.

In the case of artificial lattice film made of Co/Pt, in order to increase the magneto-optical effect such as the Kerr rotation angle, the amount of Co (a magnetic metal) should be maximised because magnetic metals contribute directly to the magneto-optical effect. Therefore, the layer thickness ratio of Co/Pt (expressed by $t_{Co}/t_{Pt}$) is preferably as large as possible. However there is a problem if this value $t_{Co}/t_{Pt}$ exceeds 1/2, the squareness of magnetic hysteresis degrades and a satisfactory perpendicular magnetic film cannot be obtained (J. Appl. Phys. 67 (4), p.2136 (1990)). Therefore in the case of the magnetic metal noble metal multilayers represented by Co/Pt a perpendicular magnetic film containing a large amount of magnetic metal such as Co has not been obtainable.

The reader is referred to other examples of magnetic recording media using palladium and cobalt layers as disclosed in EP-A-0241080 and EP-A-0459411, the latter document falling under the provisions of Article 54(3) EPC.

Accordingly, an object of the present invention is to provide a perpendicular magnetic film which contains a large amount of magnetic metal whilst retaining satisfactory perpendicular magnetic properties.

Another object of the present invention is to provide a magnetic recording medium comprising the perpendicular magnetic film having a relatively large amount of magnetic metal.

In accordance with the present invention, there is provided a perpendicular magnetic film comprised of layers of M and N, wherein M consists essentially of at least one magnetic metal element; and N consists essentially of at least one noble metal element; each combination of layers M and N forming a couple, said film including a unit of at least 1 but no more than 5 couples, the unit having a thickness of less than 50 Å.

In accordance with the sub-claims, there is also provided recording media comprising a substrate and a film as described above.

In order that the invention may become more apparent and more readily appreciated, the following detailed description of the presently preferred non-limiting embodiments by of example only is now provided, in conjunction with the accompanying drawings, wherein:

Figure 1 is a schematic view of an ion beam sputtering apparatus;

Figure 2 is a graph showing magnetization- magnetic field (M-H) curve;

Figure 3 to Figure 5 are graphs showing magnetic and magneto-optic characteristics of one embodiment;

Figure 6 is a schematic cross-sectional view of a film according to one embodiment;

Figure 7, Figure 8(a), (b) and (c), Figure 9, Figure 10(a), (b) and (c), Figure 11, Figure 12(a), (b) and (c), Figure 13(a) and (b), Figure 15(a) and (b), Figure 16(a) and (b), Figure 17 to Figure 19 are graphs showing magnetic characteristics of embodiments; and

Figure 14 is a graph showing an M-H curve of an ideal model.

In the case of the magnetic metal-noble metal system perpendicular magnetic film, which consisted of alternating layers, the M/N layers were stacked ten times more than once to a total film thickness of several 100 angstrom. However, by limiting the number of total couples in Co/Pt multilayers to several times, film characteristics were investigated. As a result, a perpendicular magnetic film containing much magnetic metal could be obtained when the number of total couples in Co/Pt multilayers was reduced. A first embodiment of the invention is a perpendicular magnetic film which can be characterised as a unit of the type:

$$(M/N)n, \ (1 \leqq n \leqq 5)$$

where

M is a layer comprising and preferably made of at least one magnetic metal element,

N is a layer comprising and preferably made of at least one noble metal element,

n is the number of couples, each couple consisting of one M layer and one N layer, wherein the total thickness of the unit is less than 50Å.

The conditions that n is 2 or 3 and the total thickness of the film is 30 Å or less are preferable. Co, which is one of the magnetic metals, is a representative magnetic metal M. The elements of Fe, Ni and the like are also magnetic metals. Combinations of more than one such magnetic element are also usable and thus within the scope of the invention.

Furthermore, Pt is a representative noble metal N. In addition, Pd, Ru, Au, Ag and the like are also usable. Combinations of more than one such noble metal are also usable and thus within the scope of the present invention.

When the value of n is more than 5, the squareness of hysteresis degrades and a perpendicular magnetic film having good squareness may not be obtained.

When the total thickness of the film is 50 Å or more the square ratio degrades and a good characteristic perpendicular magnetic film may not be obtained. Preferably the total thickness is 30 Å or less.

It is desirable that the value of the thickness ratio $t_M/t_N$ ($t_M$ being thickness of a magnetic metal layer and $t_N$ being thickness of a noble metal layer) is 0.6 or more.

If the value of $t_M/t_N$ is set above 0.6, the coercive force of the perpendicular magnetic film can be increased further. Compared with conventional products, the amount of magnetic metal per unit thickness increases. As a result magneto-optical effects improve, and as the amount of noble metal decreases, then the cost of the film drops. However, if the ratio of magnetic metal increases excessively, the perpendicular magnetisation may become hard to obtain and therefore it is also desirable that the value of $t_M/t_N$ be 3.0 or less.

A second embodiment of the invention is based on perpendicular magnetic film which can be characterised thus:

$$(M/N)n$$

where

M is a layer consisting essentially of at least one magnetic metal element, and whose thickness is 2 to 16Å;

N is a layer consisting essentially of at least one noble metal element, whose thickness is 2 to 16Å;

n represents the number of couples consisting of one M layer and one N layer expressed as (M/N);

the total thickness of the film is less than 50Å.

When the thickness of one M layer ($t_M$) is more than 16 Å, the perpendicular magnetization may be hard to obtain. On the other hand, when the thickness is less than 2 Å, insufficient magnetization may be achieved. It is further desirable that its thickness be 3 Å to 15 Å.

When the thickness of one M layer ($t_M$) is more than 16 Å, the magnetic coupling between M layers may be impeded. On the other hand, when the thickness is less than 2 Å, the perpendicular magnetization may be difficult to achieve. It is further desirable that its thickness be 3 Å to 15 Å.

It is desirable that the value of the thickness ratio $t_M/t_N$ be 0.6 or more for similar reasons as set out above, in respect of the first embodiment of the invention.

A third embodiment of the invention is a perpendicular magnetic film which can be characterized thus:

$(M/N)_n$ is defined as a unit of n couples, where

M is a layer essentially consisting of at least one magnetic metal element,

N is a layer essentially consisting of at least one noble metal element,

n is a number of couples consisting of one M layer and one N layer, and

multilayers are formed of at least two such units with at least one non-magnetic layer interposed between such units.

The non-magnetic layer has the function of negating the magnetic interaction between the units which are opposing each other through the non-magnetic layer. As the non-magnetic layer(s), any substances forming films may be useful if they are non-magnetic. For instance, $SiO_2$, $Al_2O_3$, various glasses, Pt, Pd, Au, Ag, Al, Cu, Mn, Cr, Si etc. are usable. The non-magnetic layer thickness should be more than about 10 Å, at which the magnetic interaction is blocked. It is desirable for the non-magnetic layer to be as thin as possible in order to minimize loss of light for the magneto-optical effects. Furthermore, if it is too thick, the film may not be regarded as magnetically united multilayers and therefore, the maximum thickness of any such interposed non-magnetic layer is preferably 100 Å. A thickness of 20 to 100 Å is thus desirable.

The bottom noble metal layer of $(M/N)_n$ units may also have a function as a non-magnetic layer.

Although the thickness of couples in a unit is constant, the thickness of couples in one unit may be different from that of another unit. Further, the number of repeating layers may be different between the units.

It is desirable that a ratio of a magnetic metal layer thickness ($t_M$) to noble metal layer thickness ($t_N$) is 0.3 to 3.0. It is more desirable that the ratio is 0.6 or more for the similar reasons as given above for the first embodiment.

The perpendicular magnetic film of the present invention can be prepared on a substrate such as a glass plate or resin plate by a thin film forming method such as, for example, various sputtering methods, an evaporation method or an MBE (molecular beam epitaxy) method. The noble metal layer N may normally be positioned on the substrate. The noble metal layer can be formed on the substrate as a foundation layer, of about 10 to 300 Å, to improve coercive force and squareness of the hysteresis curve for the perpendicular magnetic film.

When the magnetic layer is positioned on such a top layer, a further noble metal layer may be added.

This is simply an addition of one noble metal layer to the $(M/N)_n$ multilayer unit.

Film of the present invention is usable as a perpendicular magnetic recording medium, and it is also promising as a high density magneto-optical recording medium, with attractive S/N ratio because it is capable of displaying magneto-optical effects better than conventional magneto-optical recording media. Further, as a recording medium, the present film may be used as a recording layer and a magnetic biasing layer.

In a third embodiment, the alternating M/N couples is the basic practice for the construction of the film. If a layer other than noble metal is used as a non-magnetic layer, the perpendicular magnetization becomes difficult to obtain and therefore, if a non-magnetic layer is made of other than noble metal, such as of Cu, it is desirable to control the film construction to position the N layer on the interface with the non-magnetic layer or to add the N layer to the repeating couples (M/N), interposing the non-magnetic layer between noble metal layers.

In this third embodiment, if the coercive forces of the $(M/N)_n$ multilayer units through the non-magnetic layer are different from each other, a perpendicular magnetic film having a step-wise hysteresis loop can be obtained. Using such a film having such a step-wise hysteresis loop, multi-value recording and overwrite recording becomes feasible.

Further, the present film may be suitable for reading magnetic records by the change of a Faraday's rotation angle as it is large.

EXAMPLE 1

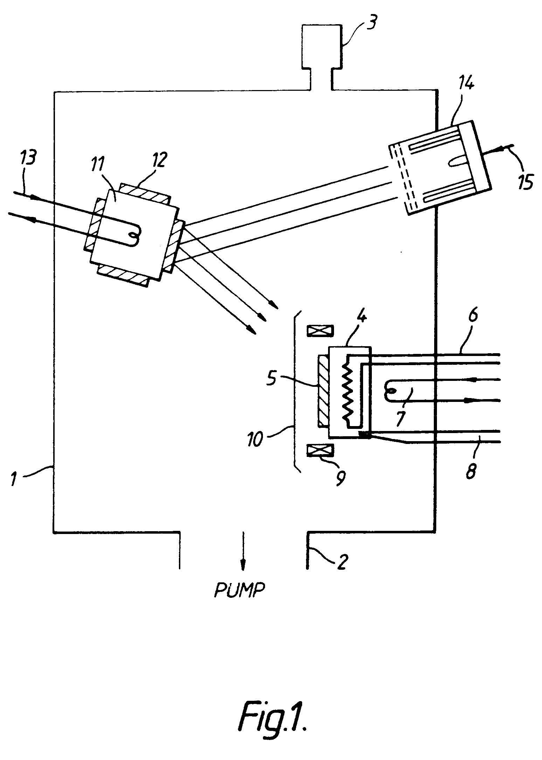

Using an ion beam sputtering system as shown in Figure 1, layers of Co (magnetic metal layer M) and Pt (noble metal layer N) were deposited on a quartz glass substrate.

Figure 1 shows an ion beam sputtering apparatus used in this example. An exhaust port 2 of a chamber 1 is connected to a vacuum pump (not shown), and the pressure in the chamber 1 is measured by a pressure gauge 3. A substrate holder 4 is installed in the chamber 1, and a substrate 5 is held on the substrate holder 4. A heater 6 is provided in the substrate holder 4, and cooling water 7 is flowed near the substrate holder 4 to regulate the temperatures of the substrate holder 4 and the substrate 5. The temperature of the substrate holder 4 is measured with a thermocouple 8. Means 9 for applying magnetic field is provided near the substrate 5 to apply a magnetic field along the surface of a layer formed on the substrate 5. A shutter is provided in front of the substrate 5. A target holder 11 is rotatably provided at a position opposed to the substrate 5, and a plurality of targets 12 are mounted on the surface of target holder 11. The target holder 11 is cooled by cooling water 13. An ion gun 14 is provided at a position opposed to the targets 12, and Argon gas 15 is supplied to the ion gun 14.

The conditions were such that, after exhausting the chamber 1 to a vacuum of $4 \times 10^{-7}$ torr in advance, the chamber 1 was charged with Argon gas (purity 99%) until the partial pressure became $1.5 \times 10^{-4}$ torr. Argon gas was then ionized, 500V was applied to the ion gun 14 and an accelerating voltage ion beam radiated to the target. Metallic targets of Co and Pt were prepared and Co and Pt were deposited alternately by rotating these targets properly.

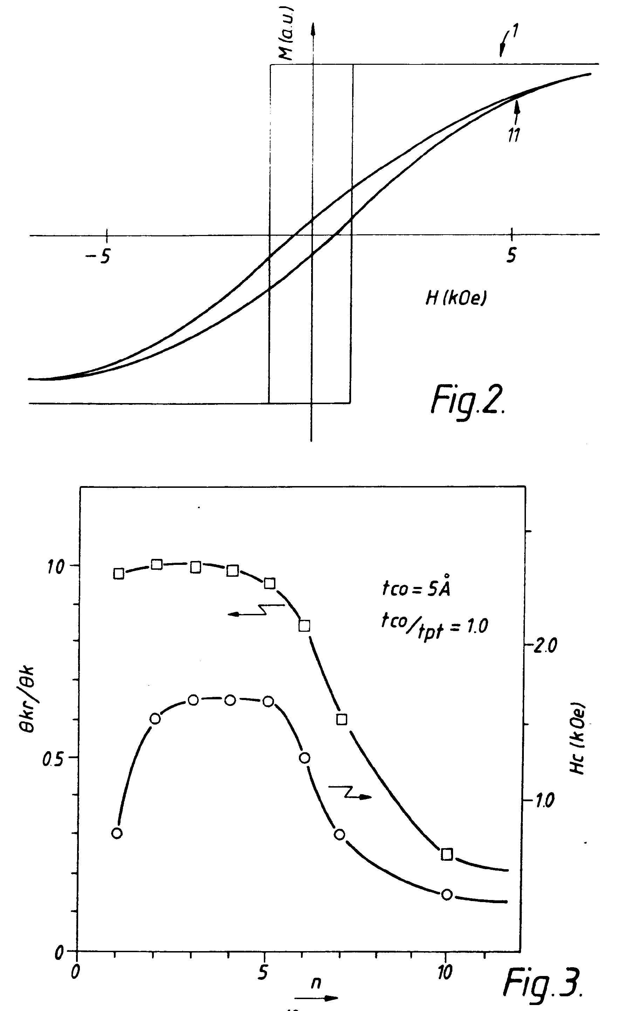

Thickness of the Co layer ($t_{Co}$) was 5 Å, that of the Pt layer ($t_{Pt}$) was 5 Å and the number of repeating Co/Pt couples in a unit is represented by n. The results obtained by varying n are shown in Figures 2-6.

Shown in Figure 2 is the M-H curve of Sample No. 1-1 (n=2). It can be seen that when the magnetic field was applied perpendicular to the film surface, remanent magnetization (Mr) and coercive force (Hc) are larger than those when the magnetic field was applied parallel to the film surface. A perpendicular magnetic film was obtained.

Figure 3 shows change to the squareness of hysteresis ($\Theta kr/\Theta kf$) and coercive force (Hc) by the Kerr effect measurement (wavelength 400 nm) as a function of the number of couples n. Figure 3 shows both the squareness of hysteresis and the coercive force are satisfactory where $n \leqq 5$.

Similar indications were observed on other magnetic and noble metals.

EXAMPLE 2

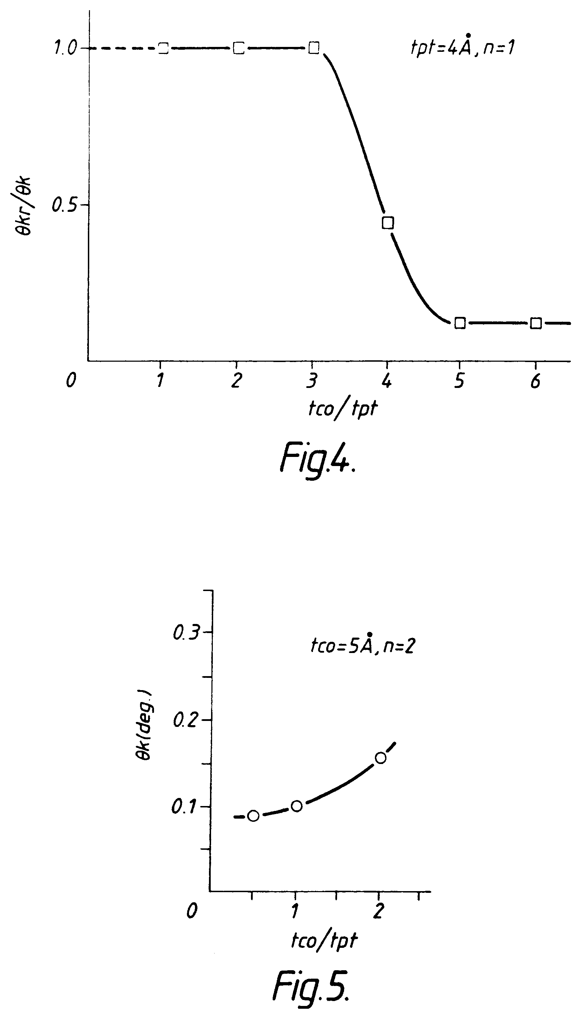

The squareness of hysteresis ($\Theta kr/\Theta kf$) when the thickness ratio ($t_{Co}/t_{Pt}$) was changed under the condition $t_{Pt} = 4$ Å and n=1 was investigated using the same method as in EXAMPLE 1, and the result is shown in Figure 4.

As clearly seen in Figure 4, good perpendicular magnetization is obtained for ratios where $t_{Co}/t_{Pt} \leq 3$.

EXAMPLE 3

When the film thickness ratio $t_{Co}/t_{Pt}$ was changed in a range from 0.5 to 2 under the conditions that $t_{Co}$ was 5 Å and n=2 using the same method as in EXAMPLE 1, the ratio of squareness $\Theta kr/\Theta kf = 1$ and a good magnetized film was obtained.

The relation between the Kerr rotation angle ($\Theta k$) and $t_{Co}/t_{Pt}$ is shown in Figure 5. As is clear from Figure 5, the Kerr rotation angle $\Theta k$ tends to increase as $t_{Co}/t_{Pt}$ increases.

EXAMPLE 4

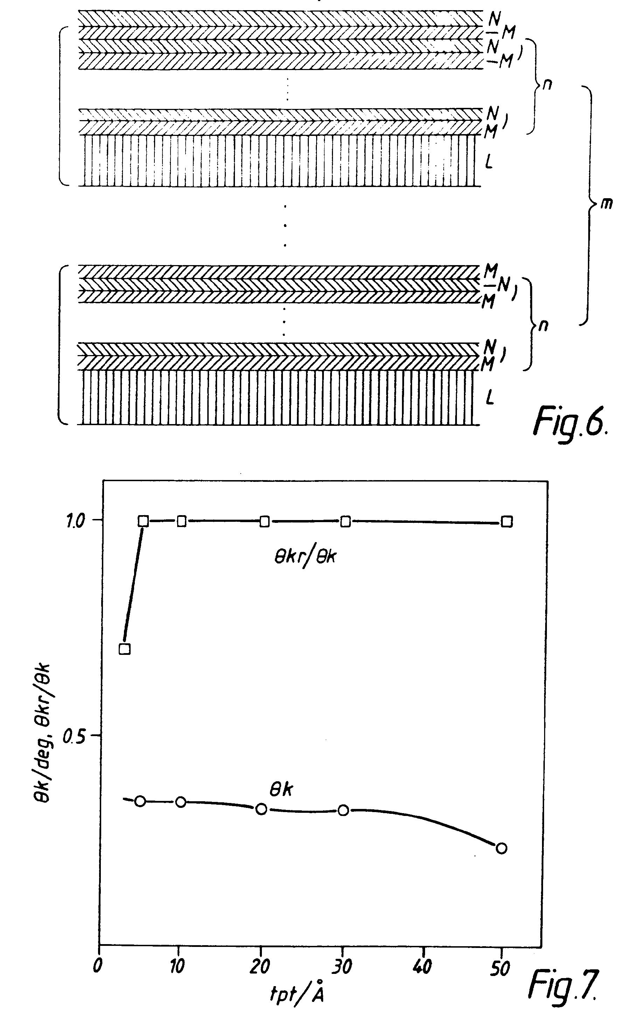

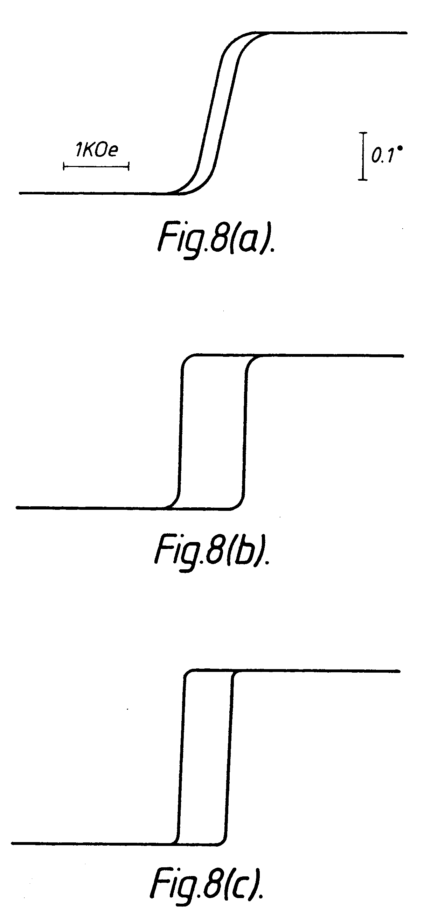

Figure 6 shows a multilayer unit of the type $N/\{M/(N/M)n/L\}m$ formed on a quartz substrate. A couple of the magnetic layer M (Co) and the noble metal layer N (Pd) was stacked repeatedly n times on the non-magnetic layer L (Pt) and finally, a magnetic layer M was put on the top of the unit (N/M)n then formed into another unit of the type {M/(N/M)n/L}. This latter unit was repeated m times and noble metal layer N was put on the top of the repeated units as shown in Figure 6.

The perpendicular magnetic film shown in Figure 6 was formed by using Co as the magnetic layer M, Pt as the noble metal layer N, and Pt as the non-magnetic layer L.

In forming the film, after reducing the pressure in the chamber to $5 \times 10^{-6}$ torr, Argon gas was introduced and the film was formed by RF sputtering at an Argon gas partial pressure $5 \times 10^{-3}$ torr. Providing a Co target and a Pt target, a Co layer and a Pt layer were deposited alternately at high frequency output 100V and 50-200W, respectively.

The thickness of the Co layer ($t_{Co}$) (the magnetic layer) was fixed at 10 Å, that of the non-magnetic layer at 100 Å, the number of couples n at 2 and m at 2. The Kerr rotation angle (400 nm) was measured by varying thickness of the noble metal layer ($t_{Pt}$). The result is shown in Figure 7.

From Figure 7 it is seen that the ratio of squareness dropped in a region where $t_{Pt}$ was above 3 Å, i.e., $t_{Co}/t_{Pt}$ was above 3. The Kerr rotation angle dropped in a region where $t_{Pt}$ was below 50 Å, i.e., $t_{Co}/t_{Pt}$ was below 0.3.

The hysteresis curves of the Kerr rotation angle when $t_{Pt}$ was 3 Å, 5 Å, and 30 Å are shown in Figure 8 (a), (b) and (c), respectively. From these curves it can be seen that when $t_{Pt}$ is 3 Å, the squareness of hysteresis is bad and the film is an in-plane magnetized film.

Further, the same result was obtained from the film prepared by an IBS (Ion Beam Sputtering) method.

## EXAMPLE 5

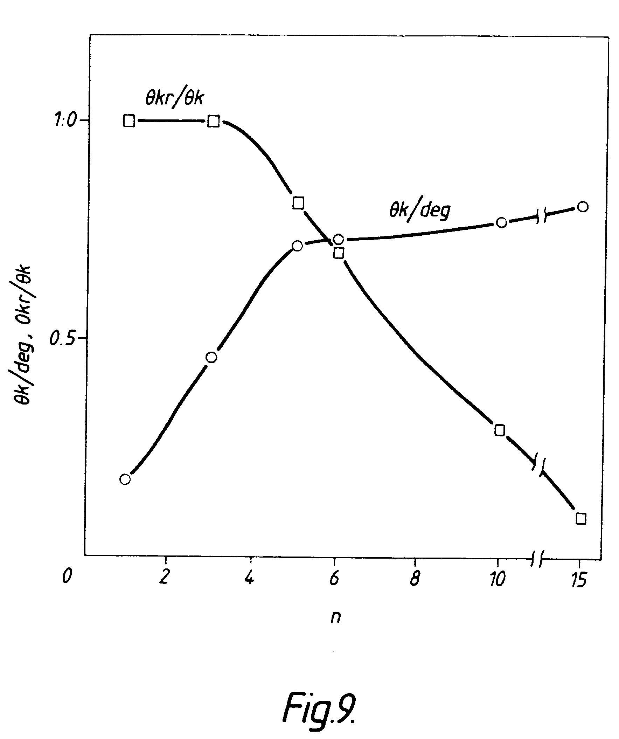

Co as the magnetic layer, Pd as the noble metal layer and Pt as the non-magnetic layer are prepared and a multilayer unit of the type N/{(N/M)n/L}m was formed on a quartz substrate as in EXAMPLE 4 by an RF sputtering method. Shown in Figure 9 is the characteristic of the film when n (number of couples) was varied under the conditions of $t_{Pd}$ fixed at 5 Å, $t_{Co}$ at 5 Å, thickness of the non-magnetized layer at 5o Å and m at 2.

From Figure 9 it is seen that the ratio of squareness ($\Theta kr/\Theta k$) drops rapidly in a region where n exceeds 5 and the Kerr rotation angle increases satisfactorily in a region where n is below 5 with the increase of n but a degree of increase drops sharply in a region where n is more than 5.

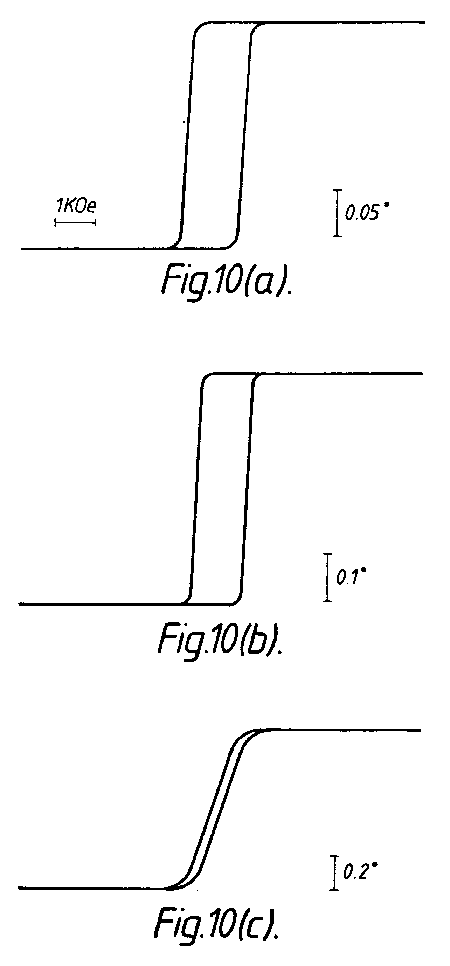

The variation of Kerr hysteresis loops as a function of external magnetic field in case of n = 1, 5 and 10 are shown in Figure 10(a), (b) and (c), respectively. When n = 5, the feature of in-plane magnetization started to appear.

## EXAMPLE 6

Using Ni as the magnetic layer M, Au as the noble metal layer N and Ag as the non-magnetic layer L, a multilayer unit of the type N/{M/(N/M)n/L}m was formed on a quartz substrate as in EXAMPLE 4 by an RF sputtering method.

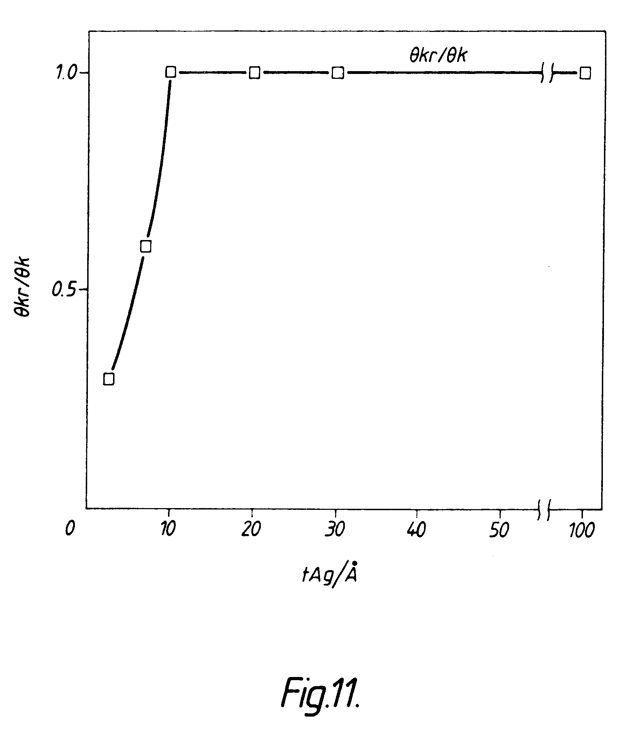

Shown in Figure 11 is the characteristic of the film when the thickness of the non-magnetic layer L was varied under the condition of $t_{Au}$ fixed at 10 Å, $t_{Ni}$ at 15 Å, m = 5 and n = 2.

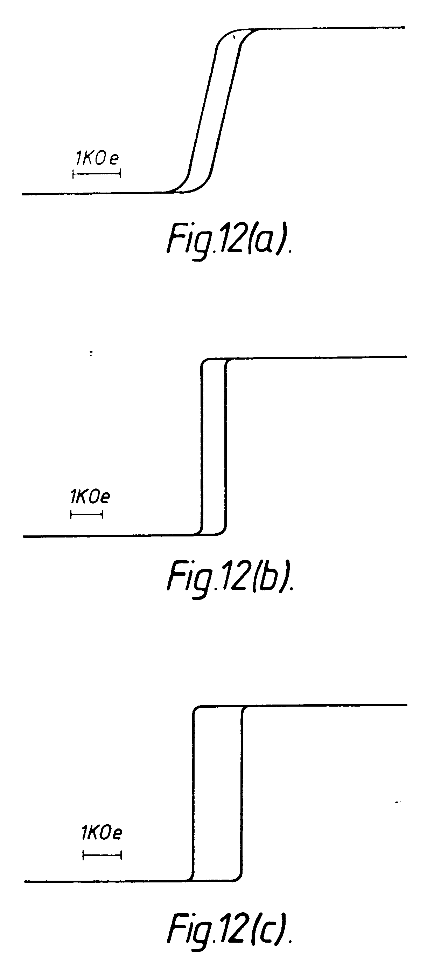

From Figure 11 it is seen that the ratio of squareness drops in a region where $t_{Ag}$ is below 10 Å. The various Kerr hysteresis loops as a function of the external magnetic field when $t_{Ag}$ is 7, 10 and 100 Å are shown in Figure 12(a), (b) and (c), respectively. It is seen that when $t_{Ag}$ was 7 Å, the squareness was bad, the film was in-plane magnetized and the coercive force was low.

Therefore, the coercive force can be increased and a good magneto-optical effect can be obtained without degrading the squareness with non-magnetic layers thicker than 10 Å.

## EXAMPLE 7

Using Co as the magnetic layer M, Au as the noble metal layer N and Al as the non-magnetic layer L, a multilayer unit of the type N/{M/(N/M)n/L}m was formed on a quartz substrate as in EXAMPLE 4 by an RF sputtering method.

In Sample 7-1, $t_{Al}$ was set at 20 Å, $t_{Co}$ at 5 Å, $t_{Au}$ at 5 Å, n=2 and m=2. In case of Sample 7-2, on the first unit of {M/(N/M)n/L}m, $t_{Al}$ was set at 20 Å, $t_{Co}$ at 5 Å, $t_{Au}$ at 5 Å and n=2, and on the second unit of {M/(N/M)n/L}m, $t_{Al}$ was set at 50 Å, $t_{Co}$ at 10 Å, $t_{Au}$ at 5 Å and n=3.

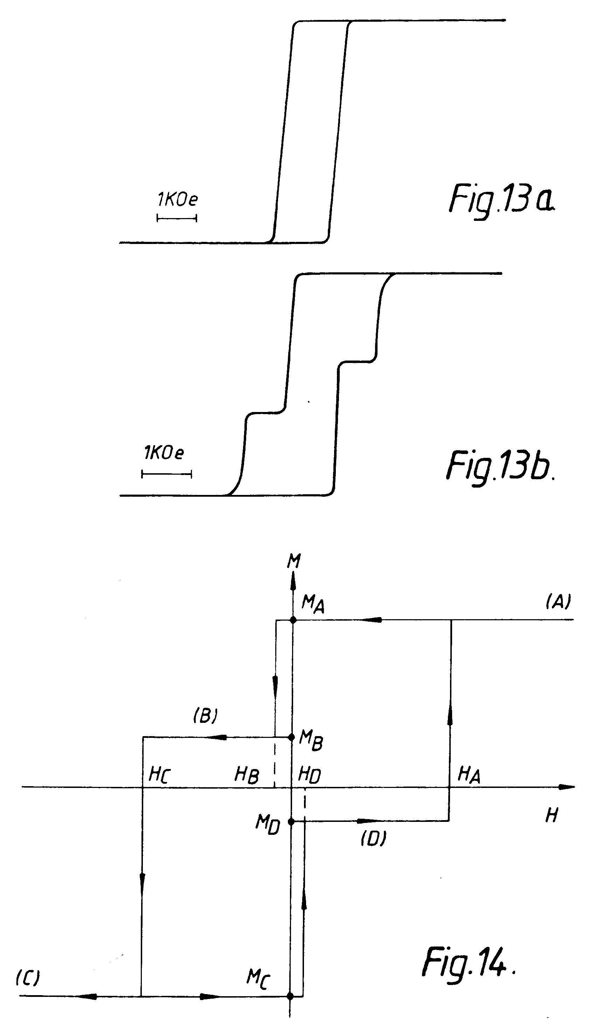

The various Kerr hysteresis loops as a function of external magnetic field in Samples 7-1 and 7-2 are shown in Figure 13 (a) and (b), respectively.

From Figure 13, it is seen that both samples have satisfactory squareness, large Kerr rotation angle and large coercive force although the total amount of Co was large because the magnetic interaction between the units was cut off by the non-magnetic layer A1. In addition, as is clear from the hysteresis curves, 2-step hysteresis was established in Sample 7-2. This indicates that on Sample 7-1, the total coercive force remains the same because the lamination layer units isolated by the non-magnetic layer in Sample 7-1 are both the same, but in the case of Sample 7-2 where the isolated laminated layer units are different from each other, multiple-stage hysteresis is shown because the coercive force of the respective films is different.

Assuming that the first laminated unit is laminated on the second lamination unit having a larger coercive force through the non-magnetic layer, the hysteresis curve in this case is schematically shown in Figure 14. When considering a case where the magnetic field is reduced from the saturated status at the point (A) and a magnetic field in the reverse direction is being applied, magnetization of both first and second lamination layer films is effected in the same direction in the saturated states. In this case, the magnetization inversion has taken place on the first lamination layer unit which has a small coercive force at the point (B). When magnetization progressed further, the magnetization inversion took place on the second lamination layer unit which has a large coercive force, and magnetization is effected in the direction opposite to the initial direction at the point (C).

Further, when the magnetic field was reduced and inverted, the magnetization inversion took place first on the first lamination layer unit which has a small coercive force at point (D) and then, the magnetization of the second laminated layer unit was reversed and returned to the status at the point (A).

In Figure 14, when the magnetic field was cancelled after applying the external magnetic field $H_\Theta > H_A$, the magnetized $M_A$ was retained in a status without magnetic field. When the magnetic field was cancelled after applying an external magnetic field $H_C < H_\Theta < H_B$, the magnetized $M_B$ was retained. When the magnetic field was cancelled after applying an external magnetic field $H_\Theta < H_C$, the magnetized $M_B$ was retained. When the magnetic field was cancelled after applying an external magnetic field $H_D < H_\Theta < H_A$, the magnetized $M_D$ was retained.

Thus, multiple values of magnetization can be retained stably according to the external magnetic field whereby recording of multiple values becomes feasible.

Further, because of multiple-stage reversed magnetic fields retained, it is also possible to make overwrite recording by controlling the coercive force, Curie point, compensation point, etc. of each lamination layer unit and using one or some of the lamination layer units for generating the bias magnetic field and other lamination layer units as the recording layer (the reader is directed to Japanese patent disclosure TOKU-KAI-HEI No. 2-230532 and TOKU-KAI-SHO No. 62-154347). Further, a bias magnetic field generating layer may be separately added.

## EXAMPLE 8

Using Co as the magnetic layer M, Pd as the noble metal layer N and Pt as the non-magnetic layer L, a laminated film having a multilayer unit of the type N/{M/(N/M)n/L}m was formed on a quartz substrate as in EXAMPLE 4 by an RF sputtering method.

In Sample 8-1, $t_{Pt}$ was fixed at 30 Å, $t_{Co}$ at 5 Å, $t_{Pd}$ at 10 Å, n=3 and M=3. In Sample 8-2, on the first unit of {M/(N/M)n/L}m, $t_{Pt}$ was fixed at 70 Å, $t_{Co}$ at 5 Å, $t_{Pd}$ at 10 Å, and n=3, and on the second unit of {M/(N/M)n/L}m, $t_{Pt}$ was fixed at 50 Å, $t_{Co}$ at 5 Å, $t_{Pt}$ at 8 Å and n=2, and the third unit of {M/(N/M)n/L}m, $t_{Pt}$ was fixed at 30 Å, $t_{Co}$ at 5 Å, $t_{Pd}$ at 15 Å and n=3.

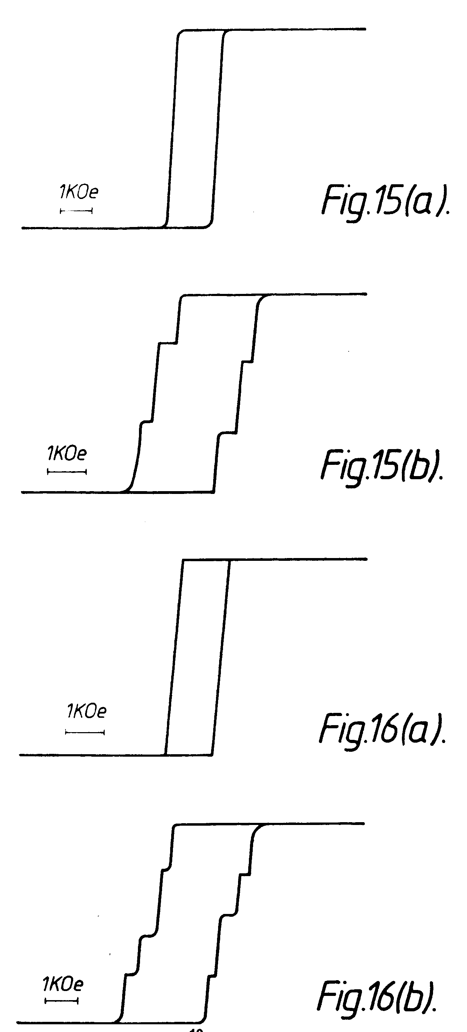

The various Kerr hysteresis loops as a function of the external magnetic field in Samples 8-1 and 8-2 are shown in Figure 15 (a) and (b), respectively. As is clear from the figures, Samples 8-1 and 8-2 are both good perpendicular magnetized films and in Sample 8-2 it can be seen that 3-stage hysteresis was obtained.

## EXAMPLE 9

Using Co as the magnetic layer M, Pt as the noble metal layer N and Cu as the non-magnetic layer L, a laminated film having a multilayer unit of the type N/{M/(N/M)n/L}m was formed on a quartz substrate as in EXAMPLE 4 using an RF sputtering method.

In Sample 9-1, $t_{Cu}$ was fixed at 15 Å, $t_{Co}$ at 10 Å, $t_{Pt}$ at 10 Å, n=4 and m=4. In Sample 9-2, on the first unit of {M/(N/M)n/L}m, $t_{Cu}$ was fixed at 50 Å, $t_{Co}$ at 10 Å, $t_{Pt}$ at 10 Å, and n=4, and in the second unit of {M/(N/M)n/L}m, $t_{Cu}$ was fixed at 50 Å, $t_{Co}$ at 5 Å, $t_{Pt}$ at 8 Å and n=2, and in the third unit of {m/(N/m)n/L}m, $t_{Cu}$ was fixed at 50 Å, $t_{Co}$ at 5 Å, $t_{Pt}$ at 8 Å and n=2, and in the third unit of {M/N(N/M)n/L}, $t_{Cu}$ was fixed at 50 Å, $t_{Co}$ at 5 Å, $t_{Pt}$ at 8 Å and n=2, and in the fourth unit of {M/N(N/M)n/L}, $t_{Cu}$ was fixed at 50 Å, $t_{Co}$ at 5 Å, $t_{Pt}$ at 10 Å and n=1.

The various Kerr hysteresis loops as a function of the external magnetic field in Samples 9-1 and 9-2 are shown in Figure 16 (a) and (b), respectively. As is clear from the figures, Samples 9-1 and 9-2 were both good perpendicular magnetic films and in Sample 9-2 it can be seen that 4-stage hysteresis was obtained.

## EXAMPLE 10

The perpendicular magnetized film of the present invention has especially large Faraday rotation angle measured from the substrate side and this will be made clear in this embodiment.

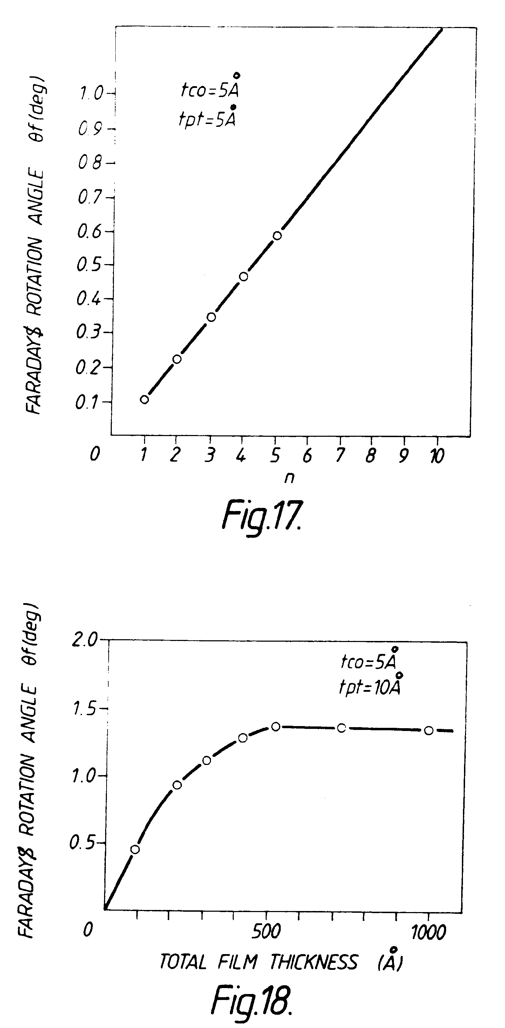

The relation between the number of multilayer units produced and the Faraday rotation angle ($\Theta f$, 400 nm) for a perpendicular magnetic film with $t_{Co}$ 5 Å, the film thickness ratio $t_{Co}/t_{Pt}=1$ and the number of couples n was investigated, and results are shown in Figure 17.

As is clear from Figure 17, it can be seen that the Faraday rotation angle from substrate side $\Theta f$ is large and tends to increase with increasing number of couples n.

The value of $\Theta f$ increased up to a total film thickness of 500 Å, but it was nearly saturated at above this thickness (shown in Figure 18).

EXAMPLE 11

As described above, a film having a multilayer unit of the type N/{M/(N/M)n/L}m can become dominant in Faraday effect, since the thickness of magnetic layer can be made thick while maintaining the perpendicular magnetic status. That is, according to the present invention, perpendicular magnetization can be maintained even if the magnetic layer is substantially thick and therefore, the Faraday rotation angle becomes large when the total thickness of the magnetic layer is made as thick as possible in the range where a beam can pass through.

Using Co (5 Å) as the magnetic layer M, Pt as the noble metal layer N and Pt (20 Å) as the non-magnetic layer L, a film having a multilayer unit of the type N/{M/(N/M)n/L}m was produced by varying $t_{Pt}$. Further, n was fixed at 3 and m was so adjusted that the entire film thickness became about 200 Å. When $t_{Pt}$ was varied to 3 -15 Å, perpendicular magnetic films were obtained in all cases.

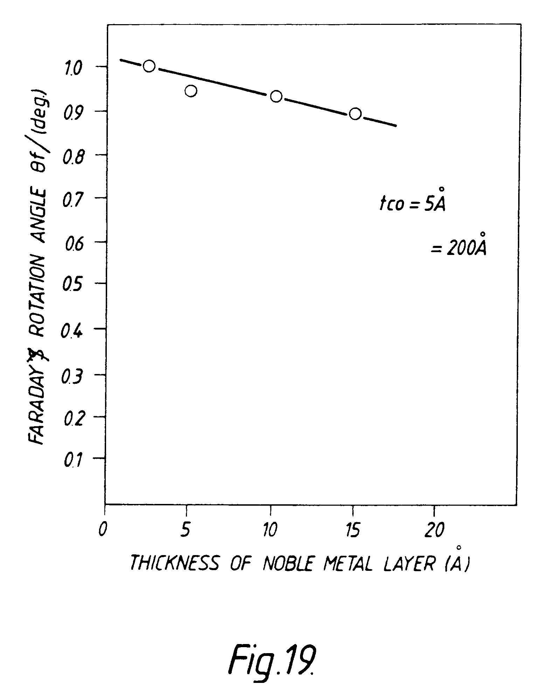

The relation between $t_{Pt}$ and $\Theta f$ (400 nm) is shown in Figure 19.

From Figure 19, it is seen that the Faraday rotation angle increases with decreasing $t_{Pt}$, i.e. an increase in the total amount of Co and maximum value $\Theta f = 1.0°$ was obtained where $t_{Pt} = 3$ Å.

**Claims**

1. A perpendicular magnetic film comprised of layers of M and N, wherein M consists essentially of at least one magnetic metal element; and N consists essentially of at least one noble metal element; each combination of layers M and N forming a couple, said film including a unit of at least 1 but no more than 5 couples, the unit having a thickness of less than 50 Å.

2. A perpendicular magnetic multiple unit film comprised of at least two units of couples as defined in claim 1 and a non-magnetic layer between said units.

3. Film as claimed in claim 1 or 2, wherein the thickness ratio $t_M/t_N$ is 0.6 or more where $t_M$ is the thickness of the magnetic metal layer M; and $t_N$ is the thickness of the noble metal layer N.

4. Film as claimed in claim 3, wherein the thickness ratio $t_M/t_N$ is 3.0 or less.

5. Film as claimed in any preceding claim wherein layer M has a thickness of 2 to 16 Å; and layer N has a thickness of 2 to 16 Å.

6. Film as claimed in any one of claims 2 to 5 wherein; said non-magnetic layer consists essentially of at least one of the following materials; $SiO_2$, $Al_2O_3$, glasses, Pt, Pd, Au, Ag, Al, Cu, Mn, Cr and Si.

7. Film as claimed in any one of claims 2 to 6, wherein said non-magnetic layer has a thickness greater than 10Å.

8. Film as claimed in claim 7, wherein the thickness of the non-magnetic layer is 20 Å to 100 Å.

9. Film as claimed in any one of claims 2 to 8, wherein the coercive force in at least two of the units is significantly different.

10. A recording medium comprising:
    a substrate; and
    a perpendicular magnetic film on the substrate, wherein said film comprises film as claimed in claim 1 or any other claim when dependent upon claim 1.

11. A recording medium comprising;
    a substrate; and
    a perpendicular magnetic film on the substrate, wherein said film comprises film as claimed in claim 2 or any other claim when dependent upon claim 2.

**Patentansprüche**

1. Senkrechter Magnetfilm, der Schichten M und N aufweist, wobei M im wesentlichen ein magnetisches Metallelement und N im wesentlichen ein Edelmetallelement enthält, wobei jede Kombination von Schichten M und N ein Paar bildet, wobei der Film eine Einheit mit zumindest einer aber mit nicht mehr als fünf Paaren aufweist und wobei die Einheit eine Dicke von weniger als 50 Å hat.

2. Senkrechter Magnetfilm mit mehreren Einheiten, der zumindest zwei Einheiten von Paaren gemäß Anspruch 1 und zwischen diesen Einheiten eine nicht-magnetische Schicht aufweist.

3. Film nach Anspruch 1 oder 2, wobei das Dickenverhältnis $t_M/t_N$ 0,6 oder mehr beträgt, wobei $t_M$ die Dicke der magnetischen Metallschicht M und $t_N$ die Dicke der Edelmetallschicht N ist.

4. Film nach Anspruch 3, wobei das Dickenverhältnis $t_M/t_N$ 3,0 oder weniger beträgt.

**5.** Film nach einem der vorhergehenden Ansprüche, wobei die Schicht M eine Dicke von 2 bis 16 Å und die Schicht N eine Dicke von 2 bis 16 Å hat.

**6.** Film nach einem der Ansprüche 2 bis 5, wobei die nichtmagnetische Schicht im wesentlichen zumindest einen der folgenden Stoffe enthält: $SiO_2$, $Al_2O_3$, Gläser, Pt, Pd, Au, Ag, Al, Cu, Mn, Cr and Si.

**7.** Film nach einem der Ansprüche 2 bis 6, wobei die nichtmagnetische Schicht eine Dicke von mehr als 10 Å hat.

**8.** Film nach Anspruch 7, wobei die Dicke der nichtmagnetischen Schicht 20 Å bis 100 Å beträgt.

**9.** Film nach einem der Ansprüche 2 bis 8, wobei die Koerzitivfeldstärke in zumindest zwei der Einheiten sehr verschieden voneinander ist.

**10.** Aufzeichnungsträger, mit:
einem Substrat; und
einem auf dem Substrat aufgebrachten senkrechten Magnetfilm, wobei der Film einen Film nach Anspruch 1 oder nach einem anderen Anspruch aufweist, sofern dieser von Anspruch 1 abhängig ist.

**11.** Aufzeichnungsträger, mit:
einem Substrat; und
einem auf dem Substrat aufgebrachten senkrechten Magnetfilm, wobei der Film einen Film nach Anspruch 2 oder nach einem anderen Anspruch aufweist, sofern dieser von Anspruch 2 abhängig ist.

**Revendications**

**1.** Film magnétique perpendiculaire constitué par des couches de métaux N et M, dans lequel le métal M est essentiellement un élément en métal magnétique et N est au moins un élément en métal noble; chaque combinaison de couches M et N formant un couple, le film en question comprenant une unité d'au moins 1 couple et au maximum 5 couples, cette unité ayant une épaisseur inférieure à 50 Å.

**2.** Unité multiple de film magnétique perpendiculaire constituée par au moins deux unités de couples tels que l'unité de couples définie à la revendication 1 ci-dessus et une couche non magnétique entre deux unités consécutives.

**3.** Film selon la revendication 1 ou la revendication 2 ci-dessus, dans lequel le ratio d'épaisseur $t_M/t_N$ est de 0,6 ou plus lorsque $t_M$ est l'épaisseur de la couche de métal magnétique M et $t_N$ est celle de la couche de métal noble N.

**4.** Film selon la revendication 3 ci-dessus, dans lequel le ratio d'épaisseur $t_M/t_N$ est de 3,0 ou moins.

**5.** Film selon l'une quelconque des revendications précédentes, dans lequel la couche M a une épaisseur de 2 à 16 Å; et la couche N a une épaisseur de 2 à 16 Å.

**6.** Film selon l'une quelconque des revendications 2 à 5, dans lequel la couche non magnétique est essentiellement produite dans un des matériaux suivants:
$SiO_2$, $Al_2O_3$, des verres, Pt, Pd, Au, Ag, Al, Cu, Mn, Cr et Si.

**7.** Film selon l'une quelconque des revendications 2 à 6, dans lequel cette couche non magnétique a une épaisseur supérieure à 10A.

**8.** Film selon la revendication 7 ci-dessus, dans lequel l'épaisseur de la couche non magnétique est de 20 A à 100 A.

**9.** Film selon l'une quelconque des revendications 2 à 8, dans lequel le champ coercitif dans au moins une des unités est différent de manière significative.

**10.** Moyen d'enregistrement comprenant:
un substrat; et
un film magnétique perpendiculaire sur le substrat, dans lequel le film est constitué par le film de la revendication 1 ou de toute autre revendication lorsque cette revendication dépend de la revendication 1.

**11.** Moyen d'enregistrement comprenant:
un substrat; et
un film magnétique perpendiculaire sur le substrat, dans lequel ce film est constitué par le film de la revendication 2 ou de toute autre revendication qui dépend de la revendication 2.

EP 0 502 699 B1

*Fig.1.*

PUMP

Fig.2.

Fig.3.

$tpt=4\overset{\bullet}{A},n=1$

Fig.4.

$tco=5\overset{\bullet}{A},n=2$

Fig.5.

11

Fig.6.

Fig.7.

1KOe        0.1°

Fig.8(a).

Fig.8(b).

Fig.8(c).

Fig.9.

1KOe

$\rceil 0.05°$

Fig.10(a).

$\rceil 0.1°$

Fig.10(b).

$\rceil 0.2°$

Fig.10(c).

15

Fig.11.

1KOe

Fig.12(a).

1KOe

Fig.12(b).

1KOe

Fig.12(c).

17

*Fig.13a.*

*Fig.13b.*

*Fig.14.*

EP 0 502 699 B1

Fig.15(a).

1KOe

Fig.15(b).

1KOe

Fig.16(a).

1KOe

Fig.16(b).

1KOe

19

Fig.17.

Fig.18.

Fig.19.